(19) Europäisches Patentamt
European Patent Office
Office européen des brevets

(11) Veröffentlichungsnummer: **0 037 537**
**B1**

(12) # EUROPÄISCHE PATENTSCHRIFT

(45) Veröffentlichungstag der Patentschrift: **06.06.84**

(51) Int. Cl.³: **B 01 J 20/20**, C 02 F 1/28, C 01 B 31/12

(21) Anmeldenummer: **81102338.1**

(22) Anmeldetag: **27.03.81**

(54) **Verfahren zur Herstellung hochspezifischer Aktivkohle.**

(30) Priorität: **03.04.80 DE 3013256**

(43) Veröffentlichungstag der Anmeldung: **14.10.81 Patentblatt 81/41**

(45) Bekanntmachung des Hinweises auf die Patenterteilung: **06.06.84 Patentblatt 84/23**

(84) Benannte Vertragsstaaten: **AT BE CH DE FR GB IT LI LU NL SE**

(56) Entgegenhaltungen:
**AU - A - 417 826**
**BE - A - 640 746**
**DE - A - 1 947 277**
**DE - A - 2 537 754**
**DE - C - 800 862**
**FR - A - 543 355**
**FR - A - 864 827**
**US - A - 1 447 452**
**US - A - 2 523 875**
**US - A - 3 876 451**

(73) Patentinhaber: **Fraunhofer-Gesellschaft zur Förderung der angewandten Forschung e.V., Leonrodstrasse 54, D-8000 München 19 (DE)**

(72) Erfinder: **Chmiel, Horst, Prof. Dr.-Ing., Paracelsusstrasse 14, D-7250 Leonberg (DE)**
Erfinder: **Hellwig, Günter, Dr.rer.nat., Im Langen Hau 29, D-7000 Stuttgart 80 (DE)**

(74) Vertreter: **Kraus, Walter, Dr. et al, Patentanwälte Kraus & Weisert Irmgardstrasse 15, D-8000 München 71 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 037 537 B1

**Beschreibung**

Die Erfindung betrifft ein Verfahren, zur Herstellung einer hochspezifischen Aktivkohle mit hoher Adsorptionsfähigkeit.

Bei der Herstellung von Aktivkohle ist es seit langem bekannt, ihre Wirksamkeit und Selektivität bei der Adsorption von Gasen, Dämpfen oder anderen Stoffen dadurch zu erhöhen, daß man die Aktivkohle entweder auf dem Weg ihrer Herstellung oder als Fertigungsprodukt mit Metallsalzen oder ihre Lösungen behandelt oder imprägniert. So ist beispielsweise mit mehreren Prozenten Metall belegte, handelsübliche Aktivkohle bereits aus der DE-A-2 537 754 bekannt. Weiterhin wird in der FR-A-864 827 das Imprägnieren von Aktivkohle mit Metallsalzen und das anschließende Trocknen beschrieben. Das Waschen der zu imprägnierenden Aktivkohle und Trocknen ist auch aus der DE-C-800 862 bekannt. Bei all diesen bekannten Verfahren erhält man jedoch adsorptionsfähige Aktivkohle, deren Adsorptionsfähigkeit schnell nachläßt und für bestimmte Zwecke nicht ausreicht.

Aktivkohle ist eines der effektivsten Adsorbentien zur Beseitigung von gasförmigen, flüssigen und festen Schadstoffen molekularer Größenordnung aus gasförmigen und flüssigen Medien.

So wird Aktivkohle beispielsweise in der Gasphase bei der Entfernung organischer Dämpfe aus Gasen zur Lösungsmittelrückgewinnung und bei vielen Verfahren zur Gasreinigung (Atemschutz, Klimatechnik, Abluftreinigung, in Kernkraftwerken und bei der Rauchgasentschwefelung) verwendet. In der Flüssigphase findet Aktivkohle beispielsweise bei der Schichtfiltration, bei Einrührverfahren, bei Perkolationsverfahren, bei der Aufbereitung von Trinkwasser, zur Abwasserreinigung Verwendung. Aktivkohle wird weiterhin als Desodorisierungsmittel im Haushalt, bei starkriechenden Arzneimittelpackungen und im Bereich der Hygiene (Kolostomiebeutel, Fußeinlagen), bei Zigarettenfiltern usw. verwendet (vgl. Ullmann's Enzyklopädie der Technischen Chemie, Band 14, 4. neubearbeitete und erweiterte Auflage, Seite 620). Die Aktivkohle besitzt jedoch den Nachteil, daß ihre Wirkung auf vielen Anwendungsgebieten schnell nachläßt. Dies ist oft darauf zurückzuführen, daß die Aktivkohle auch Wasserdampf adsorbiert und dadurch ihre Adsorptionsfähigkeit schnell verbraucht wird. Die heute im Handel erhältliche Aktivkohle weist weiterhin den Nachteil auf, daß sie durch zahlreiche Katalysatorgifte, insbesondere durch schwefelhaltige Katalysatorgifte, schnell vergiftet wird und daß ihre Wirkung nachläßt.

Der vorliegenden Erfindung liegt die Aufgabe zugrunde, ein Verfahren zur Herstellung hochspezifischer Aktivkohle zur Verfügung zu stellen, die während langer Zeit ihre hohe Adsorptionsfähigkeit beibehält und somit eine bessere Adsorptionswirkung zeigt als die heute bekannten Kohlen.

Überraschenderweise wurde gefunden, daß diese Aufgabe gelöst werden kann, wenn man die Oberfläche der hochspezifischen Aktivkohle gezielt mit Metallen belegt.

Gegenstand der Erfindung ist somit ein Verfahren zur Herstellung einer hochspezifischen Aktivkohle mit einer spezifischen Oberfläche nach BET von 800 bis 1800 $m^2/g$, bestimmt durch Argonadsorption bei $-196°C$, die auf ihrer Oberfläche mit 0,001 bis 0,1 g eines Metalls, bezogen auf 1000 $m^2$ Kohlenoberfläche, belegt ist, das dadurch gekennzeichnet ist, daß man die Aktivkohle mit entmineralisiertem Wasser wäscht, sie anschließend bei einer Temperatur von 150 bis 300°C im Vakuum bei $10^{-4}$ bis $10^{-7}$ bar während einer Zeit von 30 Minuten bis 10 Stunden beläßt, um die Oberfläche der Kohle gezielt zu modifizieren, und dann im Vakuum zu der Kohle unter Rühren eine Lösung eines geeigneten Metallsalzes zugibt, gegebenenfalls kühlt und die unter Dampf befindliche Kohle langsam, mindestens jedoch während einer Zeit von 1 Stunde, auf Zimmertemperatur abkühlt und sie anschließend trocknet.

Die Anmelderin hat überraschenderweise gefunden, daß die Adsorptionsfähigkeit von hochspezifischer Aktivkohle zur Beseitigung von gasförmigen, flüssigen und festen Schadstoffen molekularer Größenordnung aus gasförmigen und flüssigen Medien wesentlich verbessert werden kann, wenn man die Oberfläche der hochspezifischen Aktivkohle mit ausgewählten Metallen in einer bestimmten Menge belegt. Überraschenderweise zeigte es sich, daß die so modifizierte Aktivkohle kaum noch Wasserdampf adsorbiert und durch Katalysatorgifte nicht vergiftet wird.

Erfindungsgemäß wird als Ausgangsmaterial Aktivkohle verwendet. Die Aktivkohle muß hochporös und inert sein, eine große spezifische Oberfläche aufweisen und eine Porenverteilung zeigen, die von Mikroporen über Mesoporen bis zu Makroporen reichen muß. Die Aktivkohle kann in verschiedenen Korngrößenbereichen vorliegen. Sie kann z. B. als Pulver vorliegen oder als Formkörper in Zylinderform oder Kugelform. Die Korngrößen der Aktivkohle liegen im allgemeinen im Bereich von 0,08 bis 3 mm, vorzugsweise 0,1 bis 2 mm. Erfindungsgemäß kann jedoch auch eine Aktivkohle mit größerer Größe modifiziert werden.

Die Aktivkohle muß weiterhin eine große spezifische Oberfläche nach BET von 800 bis 1800 $m^2/g$, vorzugsweise von 1000 bis 1800 $m^2/g$, aufweisen. Je größer die Oberfläche ist, um so besser ist die hochporöse Aktivkohle für die vorliegende Erfindung geeignet. Die Oberfläche wird nach dem bekannten BET-Verfahren durch Argonadsorption bei $-196°C$ bestimmt.

Aktivkohlen sind im Handel erhältlich. Sie sind hochporöse Substanzen und haben im allgemeinen Oberflächen von 600 bis 1000 $m^2/g$. Sie besitzen gute Adsorptionseigenschaften sowohl für polare Substanzen, wie Wasser und Kohle, als auch für unpolare Substanzen, wie Benzol oder Alkane, d. h., im wesentlichen besitzen die Aktivkohlen unspezifische Adsorbenseigenschaften.

Einer gezielten Modifizierung der Aktivkohleoberfläche muß eine genaue Charakterisierung der Adsorbensoberfläche bzw. Aktivkohleoberfläche vorausgehen. Ergebnisse dieser Charakterisierung sind die Art, die Anzahl, die Energetik, und die bevorzugte Wechselwirkung der Adsorptionsplätze der Adsorbens- bzw. Aktivkohleoberfläche.

Aktivkohle enthält auf ihrer Oberfläche bestimmte aktive Endgruppen, wie z. B. —OH-, —COOH-, —$CO_2$- und CO-Gruppen, wie es im folgenden dargestellt wird.

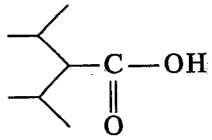

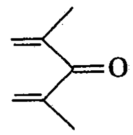

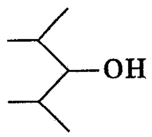

Die Anzahl und Dichte und Art der aktiven Endgruppen, die die Adsorptionsplätze auf der Aktivkohleoberfläche ausbilden, können beispielsweise im Vakuum, wie in der folgenden Gleichung dargestellt, variiert werden.

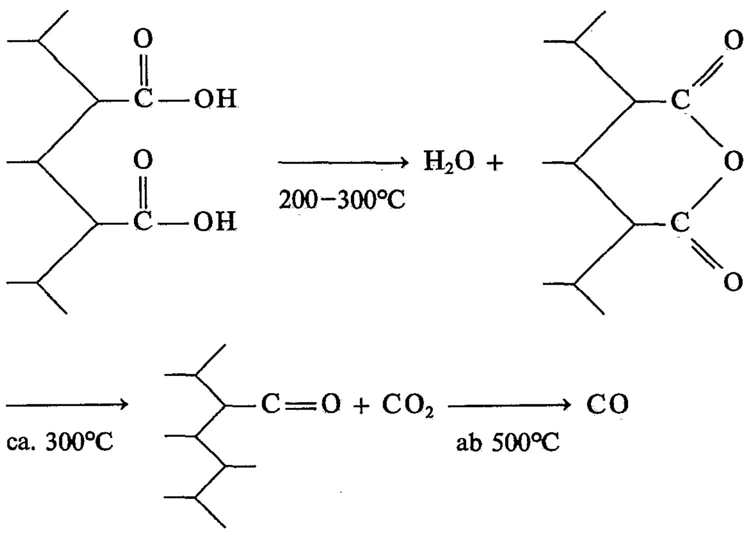


Die Variation der aktiven Endgruppen ist u. a. von der Art der verwendeten Ausgangskohle, der vorhandenen Endgruppen, der Höhe des Vakuums und der Temperatur abhängig.

Die Variation der aktiven Endgruppen ist für eine Ankopplung von Katalysatormolekülen und deren Oberflächendichtevariation wichtig. Die Charakterisierung der Aktivkohleoberfläche geschieht mit Adsorptions-, Desorptions- und mit photoelektronen-spektroskopischen Methoden. Als Kenngrößen erhält man Art, Anzahl, Verteilung und Energetik der Adsorptionsplätze auf der Oberfläche des porösen Feststoffs [vergl. G. Hellwig, Farbe und Lack, 81, S. 705 (1975);G. Hellwig, ibid, 82, S. 582, (1976); G. Hellwig, Blücher Manual, Stand Juli 1976, S. 8 (1976)].

Stark vereinfacht lassen sich die Adsorptionsplätze in zwei Gruppen unterteilen, in solche, die hauptsächlich mit polaren Molekülen wechselwirken, und in solche, die hauptsächlich mit unpolaren Molekülen wechselwirken. Schwierigkeiten werden immer dann auftreten, wenn aus polaren Trägergasgemischen oder Flüssigkeiten bestimmte polare Substanzen bzw. aus unpolaren Trägergasgemischen oder Flüssigkeiten unpolare Substanzen adsorptiv entfernt werden müssen. Hier werden immer die polaren Trägergas- oder Lösungsmittelmoleküle bzw. die unpolaren Trägergas- oder Lösungsmittelmoleküle die entsprechenden Adsorptionsplätze des porösen Feststoffs besetzen und somit das Adsorbens für seine eigentliche Aufgabe schnell unbrauchbar machen.

Durch die gezielte Vorbehandlung der Aktivkohle wird eine bestimmte Zahl von verfügbaren, Adsorptionsplätzen auf der Aktivkohleoberfläche geschaffen und eine gewisse Anzahl dieser verfügbaren Plätze wird dann mit Metallsalzen belegt.

Die Auswahl der Metallsalze richtet sich nach den physikalischen Eigenschaften der zu entfernenden Substanzen. Die Metallsalze werden in einem Testverfahren ermittelt. Die Oberflächendichte

richtet sich nach Größe und Dipolmoment der zu entfernenden Substanzen.

Erfindungsgemäß werden Aktivkohleoberflächen mit Metallen in geeigneter Oberflächendichte belegt.

Die Auswahl der Metalle ist nicht kritisch, und praktisch kann man sämtliche Metalle verwenden. Beispielsweise lassen sich die Metalle der Gruppe I, der Gruppe II, der Gruppe III, der Gruppe IV, der Gruppe V, der Gruppe VI, der Gruppe VII und der Gruppe VIII des Periodensystems verwenden (vergl. das Periodensystem in Römpp's Chemielexikon, 7. Auflage, Band 4, Seite 2557).

Die Kohle wird erfindungsgemäß vorzugsweise mit Silber, Platin, Eisen, Zink, Zinn, Zirkon, Kupfer, Chrom, Nickel, Kalium, Kobalt, Magnesium, Wismut, Wolfram, Aluminium, Palladium, Iridium, Niob, Indium, Vanadium, Osmium, Cadminium, Caesium, Cer, Antimon, Thallium, Titan, Tantal, Strontium, Barium, Rubidium, Ruthen, Rhenium, Molybdän, Mangan, Gallium, Germanium, Bor, Terbium, Tellur, Selen oder Blei belegt.

Besonders bevorzugt sind Magnesium, Aluminium, Zink, Chrom, Eisen, Titan, Zirkon, Silber, Platin, Mangan, Vanadium, Kupfer, Chrom, Rubidium, Niob, Molybdän, Cadmium, Zinn, Antimon, Wolfram, Kobalt oder Nickel.

Die Kohle wird mit dem Metall in einer Menge von 0,1 bis 10 Gew.-%, vorzugsweise 0,2 bis 5 Gew. -%, besonders bevorzugt 0,2 bis 3 Gew.-%, bezogen auf die Aktivkohle mit einer spezifischen Oberfläche von 1000 $m^2/g$, belegt. Die Menge der Belegung hängt in starkem Ausmaß von der Verwendung ab, und in vielen Fällen reichen Belegungen in einer Menge von 0,1 bis1 Gew.-% oder von 0,2 bis 1,5 Gew.-% aus.

Bevorzugte Belegungskonzentrationen für Aluminium liegen beispielsweise im Bereich von 0,15 bis 2,5 Gew.-%; für Zink im Bereich von 0,25 bis 3,5 Gew.-%; und für Chrom im Bereich von 0,3 bis 5 Gew.-%.

Die Belegung der Metalle ist in Gewichtsprozent, bezogen auf die Aktivkohle mit einer spezifischen Oberfläche von 1000 $m^2/g$, angegeben. Dies bedeutet, daß die Belegung der Metalle von der Oberfläche abhängt und daß man beispielsweise für die Belegung von Kohle, die nur eine Oberfläche von 800 $m^2/g$ aufweist, $^8/_{10}$ der aufgeführten Gewichtsprozente benötigt, andererseits für Aktivkohle, die eine Oberfläche von beispielsweise 1500 $m^2/g$ besitzt, drei halbe der oben aufgeführten Gewichtsprozente an Metallen benötigt.

Die Belegung der Kohle wird im allgemeinen durchgeführt, indem man die Kohle nach einer Vorbehandlung mit einer Lösung eines löslichen Salzes des zu belegenden Metalls behandelt.

Vorzugsweise verwendet man wäßrige Lösungen der wasserlöslichen Salze. Als Salze kann man beispielsweise die Halogenide, wie die Chloride, Bromide, Jodide, Fluoride, Nitrate, Sulfate, Sulfide, Chromate, Titanate, Wolframate usw., verwenden. Sind die Salze nicht in Wasser löslich, so verwendet man als Lösungsmittel wasserfreie polare Lösungsmittel, vorzugsweise wasserfreie Alkohole, wie z. B. Äthanol. Beispiele wasserlöslicher Salze von Metallen sind, Silberchlorid, -sulfat und -nitrat, Platinchlorid, Eisen(II)-chlorid, und -sulfat, Eisen(III)-chlorid, -sufat und -nitrat, Zinkchlorid, -sulfat und -nitrat, Zinnchlorid und -sulfat, Zirkontetrachlorid und Zirkontetranitrat, Zirkonylchlorid, Kupferchlorid, -sulfat und -nitrat, Chromtrichlorid, Chromsulfat, Chromnitrat und die Erdalkalichromate, Nickelchlorid, -sulfat und -nitrat, Kaliumchlorid, -sulfat und -nitrat, Kobaltchlorid, -sulfat und -nitrat, Magnesiumchlorid, -sulfat und -nitrat, Wolframtetrachlorid, Wismuttrichlorid, Wismuttrinitrat, Aluminiumtrichlorid, Aluminiumsulfat, Aluminiumnitrat, Palladiumchlorid, Palladiumsulfat, Palladiumnitrat, Iridiumtrichlorid, Niobchlorid, Indiumchlorid, Indiumsulfat, Indiumnitrat, Vanadiumchlorid, Vanadylsulfat, Cadmiumchlorid, Cadmiumsulfat, Cadmiumnitrat, Caesiumchlorid, Caesiumnitrat, Cerchlorid, Cersulfat, Cernitrat, Antimonchlorid und Antimonsulfat, Thalliumchlorid, -sulfat und -nitrat, Titantetrachlorid, Propyltitanat, Äthyltitanat, Thalliumchlorid, Thalliumnitrat, Strontiumchlorid, Strontiumsulfat und Strontiumnitrat, Bariumchlorid und Bariumnitrat, Rubidiumchlorid, -sulfat und -nitrat, Rheniumchlorid, -sulfat und -nitrat, Rutheniumchlorid und Rutheniumnitrosylnitrat, Rheniumchlorid, Molybdänchlorid, Manganchlorid, Mangansulfat, Mangannitrat, Galliumchlorid, Galliumsulfat, Galliumnitrat, Germaniumtetrachlorid, Bortrichlorid, Terbiumchlorid, -sulfat und -nitrat, Tellurtetrachlorid, Selentetrachlorid, Bleichlorid und -nitrat, Borsäure, Selensäure und dergl. sowie ebenso die Sulfide der obigen Metalle. Grundsätzlich kann man alle Metallsalze verwenden, solange sie in einem geeigneten Lösungsmittel löslich sind.

Die Konzentration der Metallsalzlösung ist nicht kritisch. Sie beträgt im allgemeinen 0,2 bis 10 und vorzugsweise 1 bis 5, am meisten bevorzugt 2 bis 4 Gew.-%.

Die Kohle wird vor der Belegung mit den Metallen vorbehandelt. Zur Vorbehandlung wird die Kohle mit Wasser, vorzugsweise entmineralisiertem Wasser, gewaschen. Das Waschen erfolgt, um feinste Staubteilchen und möglicherweise auf der Oberfläche der Kohle haftende Fremdstoffe zu entfernen. Das Waschen mit Wasser kann durchgeführt werden, indem man die Kohle zu der 3- bis 10fachen Wassermenge gibt und sie während einer Zeit von 30 Minuten bis 3 Stunden rührt. Hinsichtlich der Wassermenge und der Zeit gibt es keinerlei Beschränkungen, und diese hängen von praktischen Erwägungen ab. Man kann die Kohle auch im Ultraschallbad während einer Zeit von beispielsweise 30 bis 90 Minuten bei 33 kHz und 1 kW Schalleistung waschen. Die Waschbedingungen sind nicht kritisch und können vom Fachmann auf geeignete Weise in Abhängigkeit der als Ausgangsmaterial verwendeten Kohle, dem beabsichtigten Verwendungszweck usw. variiert werden.

Danach wird die Kohle in einem Reaktionsgefäß der erforderlichen Vorbehandlung unterworfen. Bei dieser Vorbehandlung wird die Kohleoberfläche so modifiziert, daß ausreichend geeignete Adsorptionsplätze an der Oberfläche vorhanden sind.
Zur Vorbehandlung wird auf eine Temperatur im Bereich von 150 bis 450° C bei einem Druck im Bereich von $1 \times 10^{-4}$ bis $1 \times 10^{-7}$ bar erhitzt. Bevorzugte Temperaturen liegen im Bereich von 200 bis 250° C bei einem Druck im Bereich von $1 \times 10^{-5}$ bis $1 \times 10^{-7}$ bar. Die geeigneten Reaktionsbedingungen können leicht von Fachmann bestimmt werden.

Verwendet man beispielsweise bei Aktivkohle eine Temperatur von 150 bis 300° C und einen Druck von $5 \times 10^{-6}$ bar, so existieren an der Aktivkohleoberfläche ca. $5 \times 10^{14}$ Adsorptionsplätze/m$^2$. Verwendet man eine Aktivkohle mit einer spezifischen Oberfläche nach BET (Argonadsorption bei −196° C) von ca. 1000 m$^2$/g, so folgt, daß 1 g Aktivkohle $5 \times 10^{21}$ Adsorptionsplätze der Art −OH und −COO besitzt. Als günstigste Belegung mit $AlCl_3$ für die Adsorption schwefelhaltiger Gase hat sich eine Menge von 111 mg $AlCl_3$/g Aktivkohle experimentell herausgestellt.

Das heißt, im statistischen Mittel ist jeder zehnte Adsorptionsplatz mit einem Al-Atom besetzt.

Nach der Vorbehandlung der Kohle im Vakuum wird die Lösung aus Metallsalz direkt zu der im Vakuum gerührten Kohle durch eine Spezialflüssigkeitszufuhreinrichtung gegeben. Dabei verringert sich der Druck im Reaktionsgefäß, z. B. auf ca. 10,3 bar, und die Kohle steht unter Lösungsmitteldampf. Wurde eine wäßrige Lösung des Metallsalzes verwendet, so steht die Kohle unter Wasserdampf. Gegebenenfalls kann man auch bei der Zugabe der Metallsalzlösung kühlen, da die Temperatur sich auf keinen Fall über 300° C erhöhen soll.

Unter Lösungsmitteldampf, z. B. Wasserdampf, stehende Kohle wird im Reaktionsgemäß zur Abkühlung mindestens während einer Zeit von 1 Stunde, vorzugsweise 4 Stunden, stehengelassen. Danach wird gelüftet und das Wasser und noch vorhandenes Lösungsmittel werden abgegossen. Das erhaltene Produkt wird im Trockenschrank getrocknet. Die jetzt mit Metall belegte Kohle ist für den Gebrauch fertig.

Soll die Kohle für Spezialverwendungen eingesetzt werden, beispielsweise für die Blutwäsche, ist es erforderlich, die Kohle einer Nachbehandlung zu unterwerfen, um noch feinste Metallteilchen, die nicht an der Oberfläche gebunden sind, oder sonstige Staubteilchen zu entfernen. Dies geschieht beispielsweise durch eine Behandlung im Ultraschallbad.

Die erfindungsgemäß hergestellte Kohle kann für viele Zwecke verwendet werden. Sie kann zur Beseitigung von gasförmigen, flüssigen und festen Schadstoffen molekularer Größenordnung aus gasförmigen und flüssigen Medien verwendet werden.

Die erfindungsgemäß hergestellte Kohle ist beispielsweise zur Gasreinigung, im Atemschutz, der Klimatechnik, der Abluftreinigung, in Kernkraftwerken und bei Rauchgasentschwefelung geeignet.

Überraschenderweise hat sich weiterhin gezeigt, daß die erfindungsgemäß hergestellte Kohle schwefelhaltige Gase, wie Thiole, nämlich Methanthiol ($CH_3SH$), Äthanthiol ($C_2H_5SH$), Thioessigsäure ($CH_3COSH$) und Schwefelkohlenstoff ($CS_2$) wirksam adsorbiert bzw. katalytisch zerlegt und die Bruchstücke adsorbiert.
Die erfindungsgemäß hergestellte Aktivkohle findet weiterhin Verwendung in Kampfanzügen mit eingebauten Aktivkohleschichten, für Arbeiten in Gebieten mit bodenständigen Giften und in Arbeitsanzügen für Labors, in denen mit Hautgiften gearbeitet wird. Wasseraufbereitung, Großküchengerüche, Toilettenanlagen, giftige Dämpfe in der Chemie.
In der Flüssigphase findet die erfindungsgemäß hergestellte Aktivkohle beispielsweise bei der Schichtfiltration, bei Einrührverfahren, bei Perkulationsverfahren, bei der Aufbereitung von Trinkwasser, zur Abwasserreinigung usw. Verwendung. Sie kann weiterhin als Desodorisierungsmittel im Haushalt, bei starkriechenden Arzneimittelpackungen, im Bereich der Hygiene (Fußeinlagen), bei Zigarettenfiltern usw. verwendet werden.

Versuche haben gezeigt, daß die erfindungsgemäß hergestellte Aktivkohle wesentlich mehr an Schadstoffen adsorbiert als die bekannten Aktivkohlen.

Man kann auch Gemische verwenden, die Aktivkohlen enthalten, die mit unterschiedlichen Metallen belegt sind. Beispielsweise kann man Gemische verwenden, die 33% Aktivkohle, die mit einem ersten Metall belegt ist, 33,3% Aktivkohle, die mit einem zweiten Metall belegt ist, und 33,3% Aktivkohle, die mit einem dritten Metall belegt ist, enthalten. Hinsichtlich der Verwendung von Gemischen gibt es keinerlei Beschränkungen, und es hat sich gezeigt, daß Gemische aus mit Metallen belegter Aktivkohle für viele Verwendungen besonders geeignet sind.

Die erfindungsgemäß hergestellte Aktivkohle ist besonders in Leberunterstützungssystemen geeignet, bei denen Schwefelverbindungen aus dem Blut entfernt werden, wie bei der Dialyse. Überraschenderweise hat sich gezeigt, daß für solche Verwendungen Aktivkohle besonders geeignet ist, die mit Aluminium, Zink, Chrom oder Eisen belegt ist.

Für diese Anwendungen verwendet man bevorzugt ein Gemisch, das 0 bis 50, vorzugsweise 20 bis 40, am meisten bevorzugt 33,33 Gew.-% Aktivkohle, die mit 0,1 bis 5, vorzugsweise 0,15 bis 2,5 Gew.-% Aluminium belegt ist; 0 bis 50 Gew.-%, vorzugsweise 20 bis 40 Gew.-%, am meisten bevorzugt 33,33 Gew.-%, Aktivkohle, die mit 0,1 bis 5, vorzugsweise 0,25 bis 3,5 Gew.-% Zink belegt ist; und 0 bis 50 Gew.-%, vorzugsweise 20 bis 40 Gew.-%, am meisten bevorzugt 33,33 Gew.-% Aktivkohle, die mit 1 bis 5 Gew.-%, vorzugsweise 0,3 bis 5 Gew.-%, Chrom belegt ist, enthält.

Die folgenden Beispiele erläutern die Erfindung.

Beispiel 1

100 g Aktivkohlepulver (Chemviron Sc XII, 6 ×12, spezifische Oberfläche ca. 1000 $m^2/g$, mit ca. 5 × $10^{14}$ Adsorptionsplätzen/$cm^2$ mit vorwiegend polarer Wechselwirkung, mit einer Adsorptionswärme gegen Wasser von 20,2 kJ/Mol) werden in einer Ultraschallwaschanlage mit 1 kW Leistung bei 30 kHz während 0,5 h in 500 $cm^3$ entmineralisiertem Wasser gewaschen und so von groben Verunreinigungen und Feinstpartikeln (Stäuben) befreit. Die Kohle wird luftgetrocknet.

In einem evakuierbaren Behälter wird die trockene Kohle bei einem Druck von $10^{-1}$—$10^{-2}$ mbar und einer Temperatur von 150°C während 0,5 h gerührt. Nach Erniedrigen der Temperatur von 150 auf 100°C wird in den evakuierten Behälter zu der Kohle unter Rühren 250 ml $NiCl_3$-Lösung mit 1,3 g $NiCl_2$ in 250 ml bidestilliertem Wasser gegeben. Unter Rühren verweilt das Gemisch Kohle/Salz-Lösung im Behälter ca. 0,5 h, bis die Temperatur auf ca. 40°C gesunken ist, Danach wird die flüssige Phase abgefiltert. Die verbleibende, modifizierte Aktivkohle wird danach so lange in mehrmals (bis zu 3mal) zu wechselnden 500 ml Wasserbädern ultraschallgewaschen, bis die Kohle kein Metall mehr in die wäßrige Phase abgibt (Nachweisgrenze 0,5 ppm). Dann wird die Kohle luftgetrocknet. Während der ganzen Prozedur blieb die Korngrößenverteilung der Aktivkohle erhalten.

Beispiel 2

Man arbeitet wie in Beispiel 1 beschrieben, verwendet jedoch 250 ml Eisen(III)-chloridlösung, die 1,5 g $FeCl_3$ in 250 ml bidestilliertem Wasser enthält.

Beispiel 3

Man arbeitet wie in Beispiel 1 beschrieben, verwendet jedoch 250 ml Silberchloridlösung, die 1,4 g Silberchlorid in 250 ml bidestilliertem Wasser enthält.

Beispiel 4

100 g Aktivkohlepulver (Chemviron Sc XII, 6 × 12, spezifische Oberfläche ca. 1000 $m^2/g$, mit ca. 5 × $10^{14}$ Adsorptionsplätzen/$cm^2$ mit vorwiegend polarer Wechselwirkung, mit einer Adsorptionswärme gegen Wasser von 20,2 kJ/Mol) werden in einer Ultraschallwaschanlage mit 1 kW Leistung bei 30 kHz während 0,5 h in 500 $cm^3$ entmineralisiertem Wasser gewaschen und so von groben Verunreinigungen und Feinstpartikeln befreit. Danach wird die Kohle luftgetrochnet.

In einem evakuierbaren Behälter wird die trockene Kohle bei einem Druck von $10^{-1}$ bis $10^{-2}$ mbar und einer Temperatur von 300°C während 0,5 h gerührt. Nach Erniedrigen der Temperatur auf 100°C wird in den die Kohle enthaltenden, evakuierten Behälter 250 ml wäßrige $AgNO_3$-Lösung mit 1,7 g $AgNO_3$ je 250 ml bidestilliertem Wasser unter Rühren zugegeben. Danach wird wie in Beispiel 1 verfahren.

Beispiele 5 bis 7

Man arbeitet wie in Beispiel 4 beschrieben, verwendet jedoch 250 ml wäßrige Eisen(III)-nitratlösung, die 1,2 g Eisen(III)-nitrat in 250 ml bidestilliertem Wasser enthält (Beispiel 5); 250 ml wäßrige Zinknitratlösung, die 1,3 g Zinknitrat in 250 ml bidestilliertem Wasser enthält (Beispiel 6); und 250 ml wäßrige Kupfernitratlösung, die 1,3 g Kupfernitrat in 250 ml bidestilliertem Wasser enthält (Beispiel 7).

Beispiele 8 bis 11

100 g Aktivkohle (Chemviron Sc XII, 6 × 12, mit einer spezifischen Oberfläche von ca. 1000 $m^2/g$, mit ca. 5 × $10^{14}$ Adsorptionsplätzen/$cm^2$ mit vorwiegend polarer Wechselwirkung, mit einer Adsorptionswärme gegen Wasser von 161 erg/$cm^2$—161 Joule/g—20,2 kJ/Mol) werden wie in den Beispielen 1 und 4 gewaschen und getrocknet. In einem evakuierbaren Behälter wird die trockene Kohle bei einem Druck von $10^{-1}$ bis $10^{-2}$ mbar und einer Temperatur von 300°C während 0,5 h gerührt. Nach Erniedrigen der Temperatur von 300° auf 100°C wird in den evakuierten Behälter zu je 100 g Kohle unter Rühre 250 ml $BiCl^3$- bzw. $WCl_6$- bzw. $PtCl_4$- bzw. $ZrCl_4$-Lösung gegeben. Das Lösungsmittel ist Äthanol. Es enthalten 250 ml Äthanol, 3,1 g $BiCl_4$ bzw. 4 g $WCl_6$ bzw. 3,4 g $PtCl_4$ bzw. 2,3 g $ZrCl_4$. Danach wird wie in

Beispiel 1 verfahren.

Auf ähnliche Weise, wie in den Beispielen 1 bis 11 beschrieben, wird Kohle mit Lösungen der in der folgenden Tabelle I aufgeführten Salze belegt.

Tabelle I

| | | | |
|---|---|---|---|
| $AgCl$ | $Ag_2SO_4$ | $AgNO_3$ | |
| $PtCl_4$ | | | |
| $FeCl_2 \cdot 4\,H_2O$ | $FeSO_4 \cdot 7\,H_2O$ | | |
| $FeCl_3$ | $Fe_2(SO_4)_3 \cdot 5\,H_2O$ | $Fe(NO_3) \cdot 9\,H_2O$ | |
| $ZnCl_2$ | $ZnSO_4 \cdot 7\,H_2O$ | $Zn(NO_3)_2 \cdot 6\,H_2O$ | |
| $SnCl_2$ | $SnSO_4$ | | |
| $ZrCl_4$ | | $Zr(NO_3)_4 \cdot 5\,H_2O$ | |
| $ZrOCl_2 \cdot 6\,H_2O$ | | | |
| $CuCl$ | | | |
| $CuCl_2$ | $CuSO_4 \cdot 5\,H_2O$ | $Cu(NO_3)_2 \cdot 3\,H_2O$ | |
| $CrCl_3$ | $Cr_4(SO_4)_5(OH)_2$ | $Cr(NO_3)_3 \cdot 9\,H_2O$ | $K_2Cr_2O_7$ |
| $NiCl_2 \cdot 6\,H_2O$ | $NiSO_4 \cdot 6\,H_2O$ | $Ni(NO_3)_2 \cdot 6\,H_2O$ | |
| $KCl$ | $K_2SO_4$ | $KNO_3$ | |
| $CoCl_2 \cdot 6\,H_2O$ | $CoSO_4 \cdot 7\,H_2O$ | $Co(NO_3)_2 \cdot 6\,H_2O$ | |
| $MgCl_2 \cdot 6\,H_2O$ | $MgSO_4 \cdot 7\,H_2O$ | $Mg(NO_3)_2 \cdot 6\,H_2O$ | |
| $WCl_6$ | | | |
| $BiCl_3$ | | $Bi(NO_3)_3 \cdot 5\,H_2O$ | |
| $AlCl_3$ | $Al_2(SO_4)_3 \cdot 16\,H_2O$ | $Al(NO_3)_3 \cdot 9\,H_2O$ | Aluminiumtributylat |
| $PdCl_2$ | $PdSO_4 \cdot x\,H_2O$ | $Pd(NO_3)_2 \cdot 2\,H_2O$ | |
| $IrCl_3$ | | | |
| $NbCl_5$ | | | |
| $InCl_3$ | $In_2(SO_4)_3 \cdot 5\,H_2O$ | $In(NO_3)_3 \cdot aq.$ | |
| $VCl_3$ | $VOSO_4 \cdot 5\,H_2O$ | | |
| $OsCl_3$ | | | |
| $CdSI_2 \cdot 2\,H_2O$ | $3\,CdSO_4 \cdot 8\,H_2O$ | $Cd(NO_3)_2 \cdot 4\,H_2O$ | |
| $CsCl$ | | $CsNO_3$ | |
| $CeCl_3 \cdot 6\,H_2O$ | $Ce_2(SO_4)_3 \cdot 5\,H_2O$ | $Ce(NO_3)_3 \cdot 6\,H_2O$ | |
| $SbCl_3$ | $Sb_2(SO_4)_3$ | | |
| $TlCl$ | $Tl_2SO_4$ | $TlNO_3/Tl(NO_3)_3$ | |

Fortsetzung

| | | | |
|---|---|---|---|
| $TiCl_4$ | | | n-Propyltitanat<br>Äthyltitanat |
| $TaCl_5$ | | $Ta(NO_3)_5$ | |
| $SrCl_2 \cdot 6\,H_2O$ | $SrSO_4$ | $Sr(NO_3)_2$ | |
| $BaCl_2 \cdot 2\,H_2O$ | | $Ba(NO_3)_2$ | |
| $RbCl$ | $Rb_2SO_4$ | $RbNO_3$ | |
| $RhCl_3$ | $H_3[Rh(SO_4)_3]$ | $Rh(NO_3)_3$ | |
| $RuCl_3$ | | $[Ru(NO)(NO_3)_3]$ | |
| $ReCl_5$ | | | |
| $MoCl_2/MoCl_3$ | | | $MO_3$ |
| $MnCl_2 \cdot 4\,H_2O$ | $MnSO_4 \cdot H_2O$ | $Mn(NO_3)_2 \cdot 4\,H_2O$ | |
| $GaCl_3$ | $Ga_2(SO_4)_3$ | $Ga(NO_3)_3 \cdot 8\,H_2O$ | |
| $GeCl_4$ | | | |
| $BCl_3$ | | | $H_3BO_3$ |
| $TbCl_3$ | $Tb_2(SO_4)_3$ | $Tb(NO_3)_3 \cdot 5\,H_2O$ | |
| $TeCl_4$ | | | |
| $SeCl_4$ | | | $H_2SeO_3$ |
| $PbCl_2$ | | $Pb(NO_3)_2$ | |

**Patentansprüche**

1. Verfahren zur Herstellung einer hochspezifischen Aktivkohle mit einer spezifischen Oberfläche nach BET von 800 bis 1800 $m^2/g$, bestimmt durch Argonadsorption bei $-196°C$, die auf ihrer Oberfläche mit 0,001 bis 0,1 g eines Metalls, bezogen auf 1000 $m^2$ Kohlenoberfläche, belegt ist, dadurch gekennzeichnet, daß man die Aktivkohle mit entmineralisiertem Wasser wäscht, sie anschließend bei einer Temperatur von 150 bis 300°C im Vakuum bei $10^{-4}$ bis $10^{-7}$ bar während einer Zeit von 30 Minuten bis 10 Stunden beläßt, um die Oberfläche der Kohle gezielt zu modifizieren, und dann im Vakuum zu der Kohle unter Rühren eine Lösung eines geeigneten Metallsalzes zugibt, gegebenenfalls kühlt und die unter Dampf befindliche Kohle langsam, mindestens jedoch während einer Zeit von 1 Stunde, auf Zimmertemperatur abkühlt und sie anschließend trocknet.

2. Verfahren nach Anspruch 1, dadurch gekennzeichnet, daß man als Lösung eine wäßrige Lösung eines Metallchlorids, -bromids, -jodids, -fluorids, -sulfats, -nitrats, -titanats, -wolframats, -chromats oder -vanadats verwendet.

3. Verfahren nach einem der Ansprüche 1 oder 2, dadurch gekennzeichnet, daß man die Aktivkohle zur Vorbehandlung in einem Ultraschallbad wäscht.

4. Verfahren nach einem der Ansprüche 1, 2 oder 3, dadurch gekennzeichnet, daß man eine wäßrige Lösung eines Silber-, Platin-, Eisen-, Zink-, Zinn-, Zirkon-, Kupfer-, Chrom-, Nickel-, Kalium-, Kobalt-, Magnesium-, Wismut-, Wolfram-, Aluminium-, Palladium-, Iridium-, Niob-, Indium-, Vanadium-, Osmium-, Cadmium-, Caesium-, Cer-, Antimon-, Thallium-, Titan-, Tantal-, Strontium-, Barium-, Rubidium-, Ruthen-, Rhenium-, Molybdän-, Mangan-, Gallium-, Germanium-, Bor-, Terbium-, Tellur, Selen- oder Bleisalzes verwendet.

5. Verfahren nach einem der Ansprüche 1, 2 oder 3, dadurch gekennzeichnet, daß man eine wäßrige Lösung eines Lanthanoiden- oder Actinoidensalzes verwendet.

6. Verfahren nach mindestens einem der Ansprüche 1 bis 5, dadurch gekennzeichnet, daß man die Aktivkohle nach dem Trocknen zur Entfernung feinster, auf ihr haftender Metallteilchen im Ultraschallbad wäscht.

## Claims

1. A process for the production of a highly specific active carbon having a specific BET surface of from 800 to 1800 $m^2/g$, as determined by argon adsorption at −196° C, which is covered over its surface with from 0.001 to 0.1 g of a metal, based on 1000 $m^2$ of carbon surface, characterized in that the active carbon is washed with demineralized water and subsequently left standing in a vacuum of from $10^{-4}$ to $10^{-7}$ bars for 30 minutes to 10 hours at a temperature of from 150 to 300° C in order specifically to modify the surface of the carbon, after which a solution of a suitable metal salt is added to the carbon with stirring in vacuo, optionally followed by cooling, and the carbon now surrounded by vapor is cooled slowly, but at least over a period of 1 hour, to room temperature and subsequently dried.

2. A process as claimed in claim 1, characterized in that the solution used is an aqueous solution of a metal chloride, bromide, iodide, fluoride, sulfate, nitrate, titanate, tungstate, chromate or vanadate.

3. A process as claimed in claim 1 or 2, characterized in that the active carbon is pretreated by washing in an ultrasonic bath.

4. A process as claimed in claim 1, 2 or 3, characterized in that an aqueous solution of a silver, platinum, iron, zinc, tin, zirconium, copper, chromium, nickel, potassium, cobalt, magnesium, bismuth, tungsten, aluminium, palladium, iridium, niobium, indium, vanadium, osmium, cadmium, caesium, cerium, antimony, thallium, titanium, tantalum, strontium, barium, rubidium, ruthenium, rhenium, molybdenum, manganese, gallium, germanium, boron, terbium, tellurium, selenium or lead salt is used.

5. A process as claimed in claim 1, 2 or 3, characterized in that an aqueous solution of a lanthanoid or actinoid salt is used.

6. A process as claimed in at least one of claims 1 to 5, characterized in that, after drying, the active carbon is washed in an ultrasonic bath to remove extremely fine metal particles adhering to its surface.

## Revendications

1. Procédé de fabrication d'un charbon activé hautement spécifique ayant une surface spécifique selon BET de 800 à 1800 $m^2/g$, déterminée par adsorption d'argon à −196° C, qui est recouvert à sa surface de 0,001 à 0,1 g d'un métal par 1000 $m^2$ de surface du charbon, caractérisé par le fait qu'on lave le charbon activé avec de l'eau déminéralisée, qu'ensuite on le laisse à une température de 150 à 300° C sous un vide de $10^{-4}$ à $10^{-7}$ bar pendant un temps de 30 minutes à 10 heures, pour modifier de façon dirigée la surface du charbon, et qu'alors, dans le vide, on ajoute au charbon, en agitant, une solution d'un sel métallique approprié, qu'éventuellement on le refroidit et que l'on refroidit à la température ambiante le charbon placé sous de la vapeur, lentement mais au moins pendant un temps de une heure, et qu'ensuite on le sèche.

2. Procédé selon la revendication 1, caractérisé par le fait que comme solution, on utilise une solution aqueuse d'un chlorure, bromure, iodure, fluorure, sulfate, nitrate, titanate, tungstate, chromate ou vanadate métallique.

3. Procédé selon l'une des revendications 1 et 2, caractérisé par le fait que l'on lave le charbon activé, pour le prétraitement, dans un bain d'ultrasons.

4. Procédé selon l'une des revendications 1, 2 et 3, caractérisé par le fait que l'on utilise une solution aqueuse d'un sel d'argent, de platine, de fer, de zinc, d'étain, de zirconium, de cuivre, de chrome, de nickel, de potassium, de cobalt, de magnésium, de bismuth, de tungstène, d'aluminium, de palladium, d'iridium, de niobium, d'indium, de vanadium, d'osmium, de cadmium, de césium, de cérium, d'antimoine, de thallium, de titane, de tantale, de strontium, de baryum, de rubidium, de ruthénium, de rhénium, de molybdène, de manganèse, de gallium, de germanium, de bore, de terbium, de tellure, de sélénium ou de plomb.

5. Procédé selon l'une des revendications 1, 2 et 3, caractérisé par le fait que l'on utilise une solution aqueuse d'un sel de lanthanoïde ou d'actinoïde.

6. Procédé selon au moins une des revendications 1 à 5, caractérisé par le fait qu'on lave le charbon activé, après le séchage, dans le bain d'ultrasons pour éliminer les plus fines particules de métal qui y adhèrent.